# EUROPEAN PATENT SPECIFICATION

(11) **EP 1 285 299 B1**
(45) Date of publication and mention of the grant of the patent: **04.08.2004**
(21) Application number: 01925822.7
(22) Date of filing: 27.04.2001
(51) Int. Cl.: G02B 6/44

(54) **OPTICAL ASSEMBLY**
OPTISCHE ANORDNUNG
ENSEMBLE OPTIQUE

(30) Priority: 19.05.2000 IT TO000459
(43) Date of publication of application: 26.02.2003
(73) Proprietor: Marconi Communications SPA, 16153 Genoa (IT)
(72) Inventor: D'INCA, Claudio, I-16153 Genoa (IT); BELTRAMI, Dario, I-27100 Pavia (IT)
(74) Representative: Hoste, Colin Francis
(86) International application number: PCT/IB2001/000853
(87) International publication number: WO 2001/088587

(56) References cited:
- GB-A- 2 338 567
- US-A- 5 167 001
- US-A- 5 446 822
- US-A- 5 659 641
- US-A- 5 987 203

## Description

This invention relates to an optical assembly, and is concerned with the mounting of terminations of optical fibres in a manner which permits their visual inspection. Optical fibres are used for the transmission of data and telecommunications and the like, and a large number of individual optical fibres are required to be terminated in equipment associated with a switch or other node at which the optical information is to be processed, eg by way of routing to its destination, combining with other information in a multiplex fashion or by switching information from one optical carrier wavelength to another.

The optical connections are housed within an enclosure, and in practice many such optical connections may need to be housed within a common enclosure. In the event of a fault in the optical system, or for regular maintenance, it is highly desirable to locate the optical connections in a manner which facilitates their inspection and checking. US 5 167 001 and US 5 446 822 disclose known examples at enclosures enabling visual inspection of the opitcal connections within. This is difficult if the optical connections are mounted within an equipment enclosure, such as a large cabinet or rack.

It is difficult to make reliable connections with optical fibres, and if a particular connection is not made properly, the loss or attenuation of light can be substantial, and in such an event, the end of the fibre at which the fault connection has been made will be cut off, and another attempt made at forming a good connection. This results in fibres of different lengths, depending on which fibres have been shortened, and this adds to the difficulties in mounting the connectors in a manner which permits visual inspection.

According to this invention, an optical assembly includes a plurality of optical connectors mounted in a fixed physical relationship with each other; a housing within which the connectors are normally housed and from which they can be withdrawn to permit inspection; and guide means determining a plurality of fixed paths of different predetermined lengths for the optical fibres within the housing, a particular path being selected in dependence on the length of the optical fibre allocated to it, the guide means comprising a plurality of first curved guides, characterized in that each first guide is of a different curvature to determine a respective path length, and is mounted so as to move with said optical connections as they are withdrawn from the housing for inspection.

The invention is further described by way of example with reference to the accompanying drawings, in which:
Figure 1 illustrates an optical assembly in accordance with the invention, in which optical connectors are located within a housing, and
Figure 2 illustrates the optical assembly in which the optical connectors are shown in their withdrawn position.

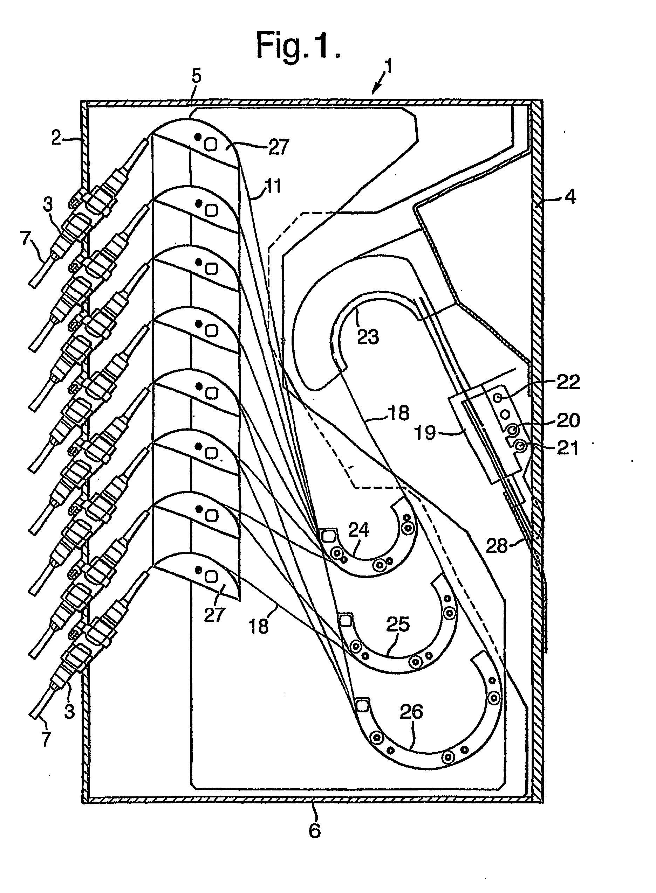

Referring to Figure 1, there is shown therein an optical assembly forming part of communications equipment and consisting of a housing 1, having a front surface 2 carrying eight optical connectors 3, a back surface which defines an optical back plane 4, two end faces 5, 6, and top and bottom surfaces (not shown). If the assembly forms part of a larger equipment, some of these surfaces can be omitted.

Information such as data or telephony is carried to or from each connector 3 via optical fibre 7. Each fibre 7 will link to other communications equipment, and in practice, these fibres 7 may be many kilometres in length. The fibres 7 terminate at the connectors 3 which are mounted in readily accessible positions at the front of the housing. The optical back plane 4 includes electro-optical components or optical-optical components which permit optical signals to be processed by way of switching, multiplexing or the like, and fibres 11-18 are provided linking each of the connectors 3 to the optical back plane 4. Although each fibre 11-18 may be a short length of fibre optically coupled to the optical back plane 4 by means of additional optical connectors (not shown), typically the ends of the fibres 11-18 remote from the connectors 3 form an integral part of the optical back plane 4 where they are routed as necessary and terminated at the appropriate optical component. Because fibres 11-18 form an integral attachment with the optical back plane, replacement of a fibre would be an expensive and difficult process.

Each fibre 11-18 is clamped to a fan-out holder 19 mounted adjacent to the optical back plane to secure the fibre at that point. Three possible positions are provided for each holder 19, these positions being represented by the three possible positions in which a holder having two locating holes 20, 21 can be mounted on pairs of the four pins 22. Typically the optical fibres are in ribbon form where they link to the back plane. The ribbon fibres are separated out into individual fibres at the fan-out holder 19, and the three possible mounting positions of the holder 19 allow for different lengths in the ribbon form of the optical fibres to the optical back plane. Thus, the individual optical fibres form a continuous run from the connectors 3 to the back plane 4, with just the section 28 being of ribbon form, eg a relatively short length in which a number of fibres are bound together.

Each fibre is led from the holder 19 round a common curved guide 23, and then round one of three further curved guides 24, 25, 26 and thence round a final curved guide 27 to its optical connector 3. It will be seen that the guides 24, 25 and 26 are of different sizes. In this example, they are of part-circular shape of different diameters, and there are three paths available to each fibre of different lengths depending on which of the three guides 24, 25 or 26 is selected.

Ideally, the guide 26 having the largest diameter, and hence representing the longest path will be selected for use. However, it is difficult reliably to terminate an optical fibre, and if a particular termination is not properly made, the faulty end of the fibre is cut off, and another attempt made to terminate the, now, shorter fibre. Three possible paths are available, giving three attempts to make a good connection for each fibre.

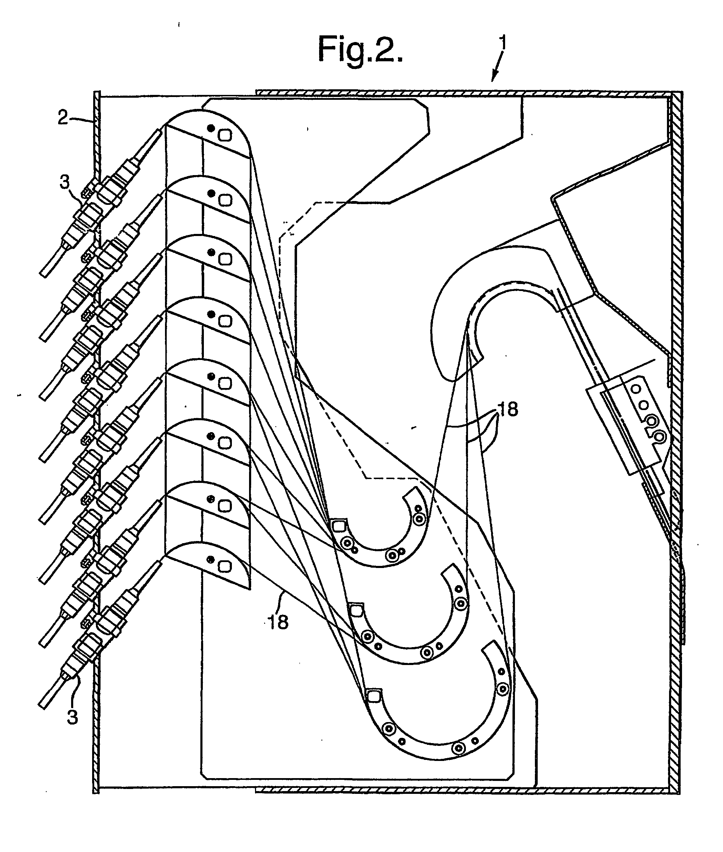

To permit visual inspection of each optical connector 3, the front surface 2 on which they are mounted can be withdrawn from the housing 1. A front assembly, attached to the front surface 2 is slidably mounted in the housing, so that the assembly can be partially withdrawn, as shown in Figure 2. The connectors 3 are now clear of the housing 1, and so can easily be checked and inspected for faults.

Guides 24, 25, 26 are mounted on a plate which moves with the connectors 3 when they are withdrawn from the housing, ie guides 24, 25, 26 are fixed relative to guide 27, and move relative to guide 23.

The guides 24, 25, 26 are so shaped and positioned in relation to guide 23 that the path lengths of each fibre remain substantially constant when the connectors 3 are in the withdrawn position (Figure 2) and in the normal operating position (Figure 1). The path lengths are not exactly constant, but are sufficiently so to enable each of the guides to securely retain the fibres without damage caused by tension.

The two sets of guides 23 and 27, together with the guides 24, 25, 26 allow for such small variations in path length as the connectors are withdrawn from the housing or returned to the housing.

## Claims

1. An optical assembly including a plurality of optical connectors (3) mounted in a fixed physical relationship with each other; a housing (1) within which the connectors (3) are normally housed and from which they can be withdrawn to permit inspection; and guide msans (23-27) determining a plurality of fixed paths of different predetermined lengths for the optical fibres (11-18) within the housing (1), a particular path being selected in dependence on the length of the optical fibre allocated to it, the guide means (23-27) comprising a plurality of (first) curved guides (24-26), **characterized in that** each first guide (24-26) is of a different curvature to determine a respective path length, and is mounted so as to move with said optical connections (3) as they are withdrawn from the housing (1) for inspection.

2. An assembly as claimed in Claim 1, in which said plurality of optical fibres (11-18) are arranged to connect each optical connector (3) to a common optical back plane (4) in the housing (1).

3. An assembly as claimed in Claim 1 or 2 and wherein each first curved guide (24-26) is in the form of a circular arc, each having a different radius.

4. An assembly as claimed in Claim 1, 2 or 3 and wherein each path has associated with it three curved guides (23-27), one of which is a said first curved guide (24-26), a second curved guide (27) adjacent to each connector (23), and a third curved guide (23) positioned towards the end of the fibre remote from said connector (3), the second guides (27) all being of the same size and curvature as each other.

5. An assembly as claimed in Claim 3 and wherein the length of a particular path is dependent on the size of the radius of a respective first curved guide (24-26) in that path.

## Patentansprüche

1. Optische Anordnung, umfassend: mehrere optische Verbinder (3), die in einer feststehenden physikalischen Lagebeziehung zueinander montiert sind, ein Gehäuse (1), in welchem die Verbinder (3) normalerweise aufgenommen sind, und aus welchem sie herausgezogen werden können, um eine Überprüfung zu gestatten, sowie Führungsmittel (23 - 27), welche mehrere festgelegte Wege mit unterschiedlichen festgelegten Längen für die optischen Fasern (11 - 18) in dem Gehäuse (1) bestimmen, wobei ein spezieller Weg in Abhängigkeit von der Länge der diesem zugeordneten optischen Faser ausgewählt wird, wobei die Führungsmittel (23 - 27) mehrere erste gebogene Führungen (24 - 26) umfassen,
**dadurch gekennzeichnet, dass**
jede erste Führung (24 - 26) eine andere Krümmung aufweist, um eine jeweilige Weglänge zu bestimmen, und derart montiert ist, dass sie sich zusammen mit den optischen Verbindungen (3) bewegt, wenn diese zur Überprüfung aus dem Gehäuse (1) herausgezogen werden.

2. Anordnung nach Anspruch 1,
bei welcher die mehreren optischen Fasern (11 - 18) angeordnet sind, um jeden optischen Verbinder (3) mit einer gemeinsamen optischen Rückwandplatine (4) in dem Gehäuse (1) zu verbinden.

3. Anordnung nach Anspruch 1 oder 2,
bei welcher außerdem jede erste gebogene Führung (24 - 26) in Form eines Kreisbogens mit jeweils einem anderen Radius vorgesehen ist.

4. Anordnung nach Anspruch 1, 2 oder 3,
bei welcher außerdem jedem Weg drei gebogene Führungen (23 - 27) zugeordnet sind, wobei eine derselben eine erste gebogene Führung (24 - 26) ist, eine zweite gebogene Führung (27) angrenzend an jeden Verbinder (3) und eine dritte gebogene Führung (23) zu dem vom Verbinder (3) entfernten Ende der Faser hin angeordnet ist, wobei die zweiten Führungen (27) alle eine einander gleiche Größe und Krümmung aufweisen.

5. Anordnung nach Anspruch 3,
bei welcher außerdem die Länge eines bestimmten Weges von der Größe des Radius einer jeweiligen ersten gebogenen Führung (24 - 26) auf diesem Weg abhängt.

## Revendications

1. Assemblage optique comprenant une pluralité de connecteurs optiques (3) montés selon une relation physique fixe les uns par rapport aux autres ; un logement (1) à l'intérieur duquel sont normalement logés les connecteurs (3) et duquel ils peuvent être retirés pour permettre une inspection ; et des moyens de guidage (23-27) déterminant une pluralité de chemins fixes de différentes longueurs prédéterminées pour les fibres optiques (11-18) à l'intérieur du logement (1) ; un chemin particulier étant choisi en fonction de la longueur de la fibre optique qui lui est associée, les moyens de guidage (23-27) comprenant une pluralité de premiers guides incurvés (24-26), chaque guide (24-26) ayant une courbure différente pour déterminer une longueur de chemin correspondante, et étant monté de telle sorte à se déplacer avec lesdits connecteurs optiques (3) lorsqu'ils sont retirés du logement (1) pour inspection.

2. Assemblage selon la revendication 1, dans lequel ladite pluralité de fibres optiques (11-18) sont agencées pour connecter chaque connecteur optique (3) à un fond de panier optique commun (4) dans le logement (1).

3. Assemblage selon la revendication 1 ou 2, dans lequel chaque premier guide incurvé (24-26) est de la forme d'un arc circulaire, chacun ayant un rayon différent.

4. Assemblage selon la revendication 1, 2 ou 3, dans lequel chaque chemin est associé à trois guides incurvés (23-27), l'un d'eux étant un dit premier guide incurvé (24-26), un second guide incurvé (27) adjacent à chaque connecteur (3) et un troisième guide incurvé (23) positionné vers l'extrémité de la fibre distante dudit connecteur (3) ; les seconds guides (27) ayant tous la même taille et courbure.

5. Assemblage selon la revendication 3 et dans lequel la longueur d'un chemin particulier dépend de la taille du rayon d'un premier guide incurvé correspondant (24-26) dans ce chemin.
